# EUROPEAN PATENT APPLICATION

(11) **EP 1 113 374 A2**
(43) Date of publication of application: **04.07.2001**
(21) Application number: 00118532.1
(22) Date of filing: 25.08.2000
(51) Int. Cl.: G06F 17/60

(54) **Service supply system**

(30) Priority: 28.12.1999 JP 37267399
(71) Applicant: Hitachi, Ltd., Chiyoda-ku, Tokyo 101-8010 (JP)
(72) Inventor: Terada, Hirofumi, Hitachi, Ltd., Intel. Prop. Dept, Chiyoda-ku, Tokyo 100-8220 (JP); Aizono, Takeiki, Hitachi, Ltd., Intel. Prop. Dept, Chiyoda-ku, Tokyo 100-8220 (JP); Shioya, Makoto, Hitachi, Ltd., Intel. Prop. Dept, Chiyoda-ku, Tokyo 100-8220 (JP); Sano, Koichi, Hitachi, Ltd., Intel. Prop. Dept, Chiyoda-ku, Tokyo 100-8220 (JP); Koga, Naoyuki, Hitachi, Ltd., Intel. Prop. Dept, Chiyoda-ku, Tokyo 100-8220 (JP); Yoshioka, Tatsuo, Hitachi, Ltd., Intel. Prop. Dept, Chiyoda-ku, Tokyo 100-8220 (JP)
(74) Representative: Strehl Schübel-Hopf & Partner

(57) **Abstract**

The present invention is intended to solve problems of the prior art, i.e., poor ability of supplying merely a portion of entire services, inability of supplying customized services suitable for respective users, and inability of supplying services keeping pace with movements of the user. A service requested from each terminal (101, 102, 103) of a user (100) to an ITS service center (120) is supplied to a user (100) in association with a travel contents company service system (130) and an air line company service system (140) in the ITS service center (120).

## Description

### BACKGROUND OF THE INVENTION

The present invention relates to the technology for implementing supply of a service desired by a user in accordance with the user's particular situation. As an example of the technology, the present invention relates to the supply of services in Intelligent Transport Systems (ITS). As used herein, the service can be supplied even to a user at a remote location, or a user who is on the move, including those involved in travels such as reservations of tickets for a travel, travel planning, and reference to a travel plan; those involved in reservation and acquisition of tickets for movies and so on; those involved in utilization of facilities such as the supply of reservation information, reservations, utilization and so on in facilities such as restaurants and so on; those involved in the supply of information such as information on traffic jam, to name a few.

In the prior art, a technique of planning a travel is disclosed, for example, in JP-A-9-212563. JP-A-9-212563 is intended to create a travel plan for utilizing facilities in an optimal period of time through simple input operations. To achieve this object, as a traveller inputs a desired facility and purpose of visit, a search is made for recommended routes and optimal recommended times at which the traveller may visit the facility for utilization. A travel plan is created based on the retrieved recommended routes and recommended visiting times.

### SUMMARY OF THE INVENTION

The prior art technique mentioned above merely makes a plan in response to each input given by the user, and cannot supply a service in accordance with a particular situation in which the user is placed. Specifically, the above cited prior art does not supply a service which matches the preference, family members, a used terminal and so on of the user. For this reason, the prior art technique can implement only a portion of planning for a travel within the entire services involved in the travel (supply of information on travel planning, reservation, visiting spots, and so on).

In addition, the travel planning typically relies only on plans previously prepared in travel agencies, and is never customized for respective individuals. Such planning policy is incapable of widely collecting transportation means and accommodations preferred by the user and combining them to create a travel plan suitable for the user. This is not simply a problem in the travel planning but is experienced widely in every service. Further, no services have been supplied keeping pace with movements of the user, corresponding to the destination. Particularly, no services have been supplied in accordance with a particular terminal used by the user.

In summary, the prior art can only supply a portion of entire services (cannot offer a one-stop service), cannot supply customized services suitable for individual users (cannot offer a one-to-one service), and cannot supply services keeping pace with movements of the user (cannot offer a seamless service).

The present invention has been made in view of the problems mentioned above, and provides the following scheme. The present invention provides a service supply system which supplies a one-stop service, a one-to-one service, and a seamless service. For example, the service supply system of the present invention proposes the contents of a service which matches personal information including the user's preference, such that an overall service desired by the user can be generally supplied only if the user accesses a server apparatus, and can supply a service including supply of information in accordance with a destination of the user on the move and a terminal used by the user.

Also, the present invention associates individual service systems connected to a service center to supply new services which cannot be offered by a single service system.

The present invention further accounts for the operation of a service center for supplying the aforementioned services. Specifically, the service center recognizes how it is utilized by users, and can collect a use rate from a business supply company which runs a business in the service center once the service center is frequently utilized. For example, the amount of use of a computer in the service center is measured to change the use rate in accordance with the measured amount of use. For example, the service center executes information processing for receiving the use rate when the amount of use exceeds a predetermined number. Conversely, when the result of the measurement indicates that the amount of use is equal to or less than a predetermined number, the computer in the service center executes the processing for paying an information supply rate to a business supply company. Here, the amount of use may be based on the number of times of accesses, a period of time for which a home page is accessed, the number of times a service is received, a period of time for which the service is received, a time from the establishment of the service center, and so on.

### BRIEF DESCRIPTION OF THE DRAWINGS

Fig. 1 is a block diagram illustrating the configuration of a system according to an embodiment of the present invention;
Fig. 2 is a flow chart illustrating a sequence of steps in a service processing procedure in the embodiment of the present invention (No. 1);
Fig. 3 is a flow chart illustrating a sequence of steps in a service processing procedure in the embodiment of the present invention (No. 2);
Fig. 4 is a table showing data transmitted as a travel planning request in Fig. 2;
Fig. 5 is a flow chart illustrating a processing procedure for performing a matching process in Fig. 2;
Fig. 6 shows a data table for personal information held by a server in the embodiment of the present invention;
Fig. 7 shows a data table for a travel plan held by the server in the embodiment of the present invention;
Fig. 8 is a flow chart illustrating a processing procedure for determining a site to be accessed;
Fig. 9 is a block diagram illustrating the system architecture of the server in the embodiment of the present invention;
Fig. 10A and 10B are block diagrams illustrating a business model in an embodiment of the present invention; and
Fig. 11 is a flow chart illustrating a processing procedure for determining a change in money flow in Fig. 10.

### DESCRIPTION OF THE EMBODIMENTS

Several embodiments of the present invention will hereinafter be described in detail with reference to the accompanying drawings.

Reference is first made to a first embodiment of the present invention.

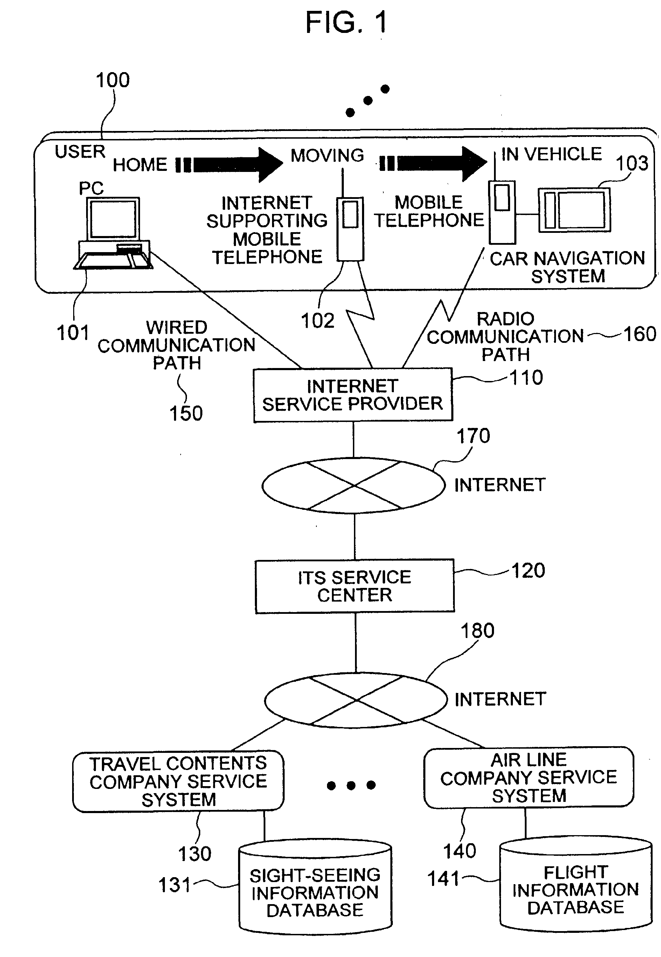

Fig. 1 is a block diagram illustrating the configuration of a travel planning support system which embodies the first embodiment of the present invention. The system illustrated in Fig. 1 comprises a personal computer (PC) 101 used by a user 100; a mobile telephone 102 supporting the Internet; a car navigation system 103; an Internet service provider 110; an ITS service center 120; a travel contents company service system 130; an air line company service system 140; a wired communication path 150; a radio communication path 160; and Internet networks 170, 180. In this embodiment, as the user moves, the user may access the ITS service center 120, using the PC 101, the Internet supporting mobile telephone 102 or the car navigation system 103 at home, on the move, or in a vehicle, respectively, to create, reference and change a travel plan in accordance with a particular situation. The Internet supporting mobile telephone 102 has a function of connecting to the Internet independently to display a home page on a screen of the mobile telephone. The car navigation system 103 has a function of displaying a home page on the Internet on a screen of the car navigation system 103 through a connection to a mobile telephone or the like. In this embodiment, although it is assumed that the respective terminals 101, 102, 103 dial-up connect the Internet service provider 110 by way of the wired communication path 150 or the radio communication path 160 to access the ITS service center 120 through the Internet network 170, the system may be configured to permit these terminals to directly dial-up connect the ITS service center 120. The wired communication path 150 is a communication path for transmitting and receiving information between a variety of terminals used by the user 100 and the ITS service center 120, and may be a public telephone network, a dedicated permanent Internet connection line, or the like, by way of example. Likewise, the radio communication path 160 is a communication path for transmitting and receiving information between a variety of terminals used by the user 100 and the ITS service center 120, and may be a communication path of mobile telephone or PHS, by way of example. The configuration of the ITS service center 120 will be described later. The ITS service center 120 corresponds to a server of the travel planning support system in the first embodiment of the present invention. Also, the ITS service center 120 is linked to the travel contents company service system 130, the air line company service system 140, and so on through the Internet network 180, so that it can utilize information offered by the respective service systems. The travel contents company service system 130 holds a variety of information (contents) on travel spots and sight-seeing which are stored in a sight-seeing information database 131. The air line company service system 140 holds information on reservation of air tickets and real time flight information which are stored in an flight information database 141. The ITS service center 120 utilizes information possessed by the travel contents company service system 130 and the air line company service system 140 as required. While the system of Fig. 1 illustrates only the travel contents company service system 130 and the air line company service system 140, the ITS service center 120 is actually linked to a variety of service systems (for example, a system for settlement), as will be taken it for granted by those skilled in the art.

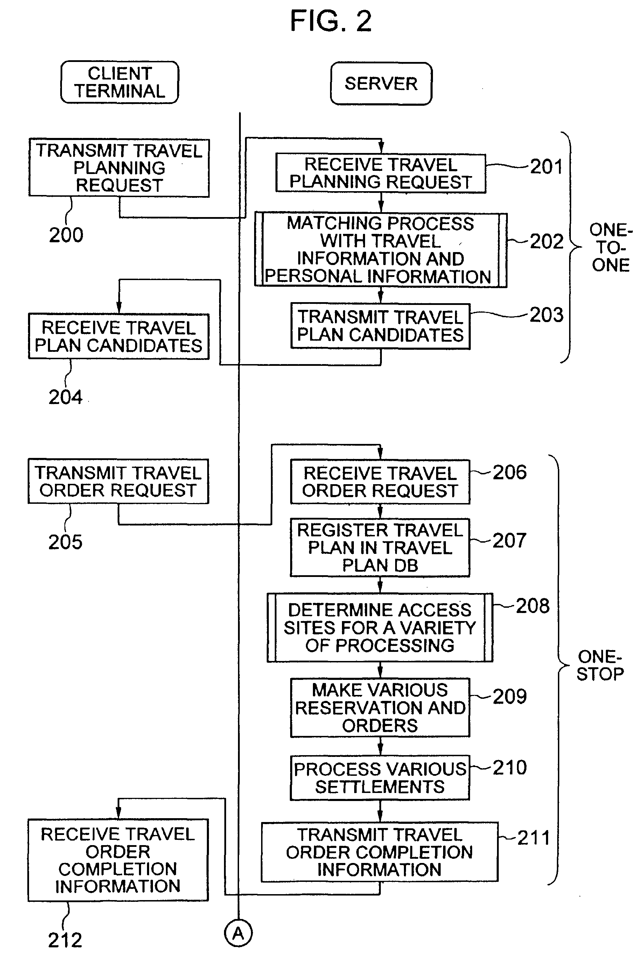

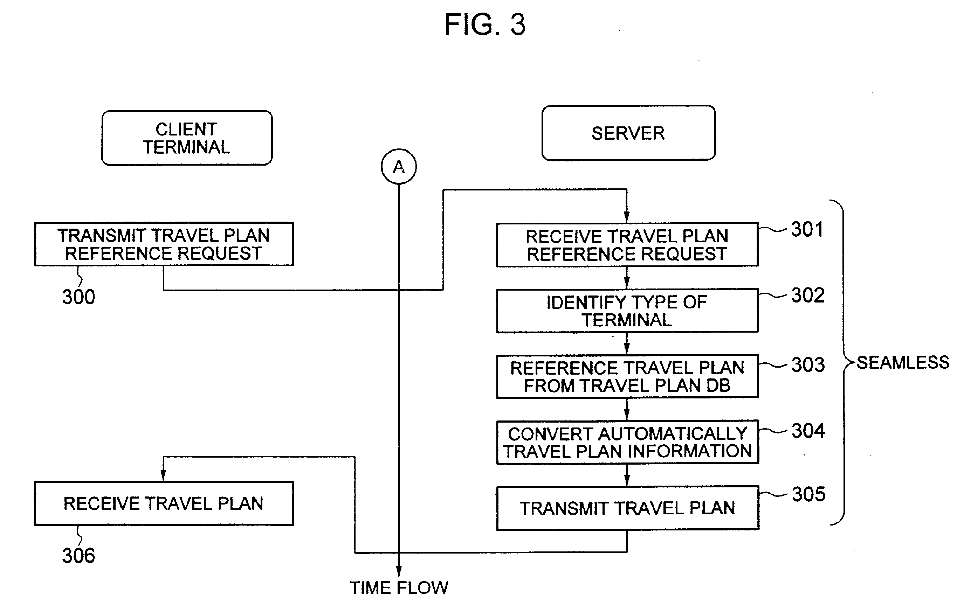

In continuation, Figs. 2, 3 illustrate the flow of service supply sequence in the travel planning support system according to the first embodiment of the present invention. In this travel planning support system, a travel plan can be automatically created before a travel, reservation and settlement can be automatically processed, and the created travel plan can be referenced during the travel. As used herein, the travel plan refers to travel pamphlets and guides which introduce the schedule of a travel, a detailed itinerary of the travel, sight-seeing information on respective sight-seeing spots, and so on in the form of still images, moving images, and speeches.

A travel planning request is transmitted from a client terminal such as the PC 101, the Internet supporting mobile telephone 102, the car navigation system 103 or the like in Fig. 1 (step 200). Upon receipt of the travel planning request (step 201), the server, which implements the ITS service center 120 in Fig. 1, matches travel information included in the travel planning request with personal information previously registered in and held in the ITS service center 120 (step 202), and automatically creates a plurality of types of travel plan candidates. At this time, the server uses the information on travels and sight-seeing spots held by the travel contents company service system 130 in Fig. 1. Such information is elements which form parts of a travel. Details on the travel information, personal information and a matching process will be described later. Then, the server transmits the automatically created travel plan candidates to the client terminal (step 203), and the client terminal receives the travel pan candidates (step 204). For creating travel plans in this manner, the server accounts for personal information such as the preference, ideas, family members and so on of an individual who is accessing the ITS service center 120, particular regions, and times to create travel plans possibly preferred to the individual. Such a service customized to each individual as described above is hereinafter referred to as the "one-to-one service."

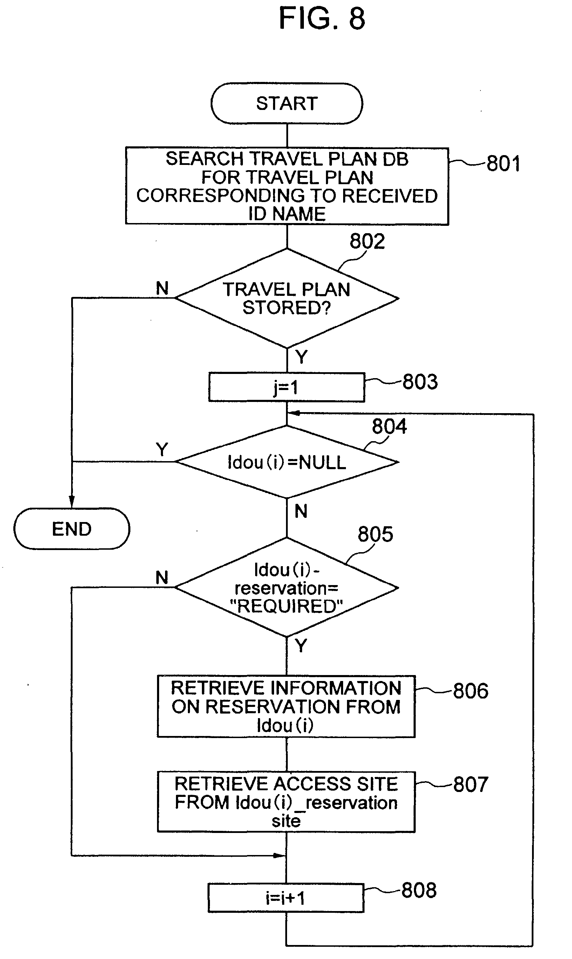

Next, the client terminal transmits a travel order request with respect to the reservation and settlement (step 205). Data transmitted as the travel order request, herein referred to, may be any information which can identify the travel plan to be ordered. Upon receipt of the travel order request (step 206), the server registers the received travel plan in a travel plan database (step 207). The travel plan database will be described later. Then, the server searches the travel plan database to retrieve and determine access sites for a variety of reservations and settlement (determines which service system to be used) (step 208). The access site may be, for example, URL of a home page into which reservation information is entered. While details on this processing will be described later, the server makes reservations for places which should be reserved, included in the travel plan (see Fig. 8). Then, the server issues commands for making a variety of reservations and orders at retrieved and determined access sites to actually make necessary reservations and process the orders (step 209). In this event, the server accesses the air line company service system 140 and so on in Fig. 1 to make reservations and so on. Once the reservations and orders are completed, the server also settles them in a similar manner (step 210). As all the reservations, orders and settlements required in the registered travel plan are completed, the server transmits travel order completion information (step 211). The transmission of information is based on an electric mail. Then, the client terminal receives the travel order completion information (step 212). By thus utilizing information related to travel planning registered in the travel plan database, a variety of reservations and settlements involved in a travel can be completed without requiring the user to navigate among a variety of reservation home pages and settlement sites. A service which accommodates all of procedures as described above on a single site is hereinafter referred to as the "one-stop service."

Next, a user on the move may reference the travel plan in a variety of situations during the travel. From a client terminal such as the PC101, the Internet supporting mobile telephone 102, the car navigation system 103 and so on in Fig. 1, a request for referencing the travel plan is transmitted (step 300). The client terminal herein referred to is not necessarily the same terminal which was utilized by the user when he created the travel plan. For example, it is contemplated that the user created a travel plan on the PC 101 at home, and references the registered travel plan on the car navigation system 103 in a vehicle. Data transmitted here includes ID with which the travel plan was registered, and terminal identifying information. The terminal identifying information reveals a terminal through which the user is accessing. Upon receipt of the travel plan reference request (step 301), the server identifies the type of the terminal from the received terminal identifying information (step 302). Then, the server retrieves the travel plan from the travel plan database based on the received ID (step 303), and automatically converts the retrieved travel plan to travel plan information to be transmitted in accordance with the identified type of the terminal (step 304). For example, when the travel plan is referenced from a PC, it is not necessary to convert information on the travel plan. However, when the travel plan is referenced from a car navigation system, information on the travel plan may be converted to reduce the image size, delete sound, and delete HTML tags which are not supported by the car navigation system. Also, when the travel plan is referenced from an Internet supporting mobile telephone, images are completely deleted. Then, the server transmits the travel plan converted in the manner mentioned above to the client terminal (step 305), and the client terminal receives the travel plan (step 306). In this way, the server delivers information in accordance with a particular situation in which the user is placed. The user situation includes a situation about his movement (including an originating location, destination, purpose, means and current location), and a terminal in use. The service as described above is hereinafter referred to as the "seamless service."

Reference is next made to the processing involved in matching travel information with personal information to create travel plan candidates, as previously shown in Fig. 2.

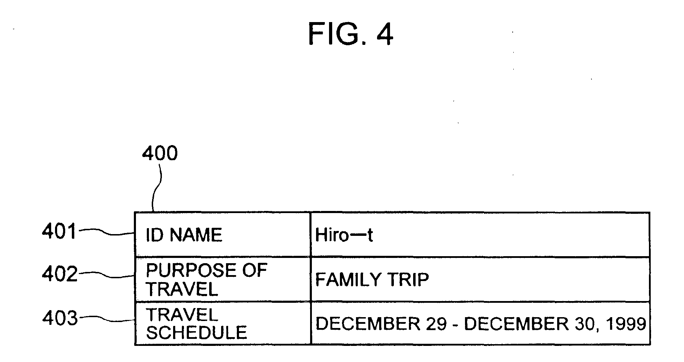

Fig. 4 shows the data structure for travel planning request transmission information. A data table 400 for the travel planning request transmission information has the following registration items: ID name 401, purpose of travel 402, and travel schedule 403. The ID name 401 is previously registered in the personal information database as personal information, and is used to identify personal information. The purpose of travel 402 indicates the purpose of travel which may be selected from family trip, date trip, business trip, a training camp for a circle, and so on. The travel schedule 403 indicates the schedule of the travel, and specifies a departure date and an arrival date. Since the previously registered personal information is utilized, a travel plan can be automatically generated by entering these data. Alternatively, it is also possible to use information on requirements of a travel (including the purpose and summary) such as the budget, destination and so on.

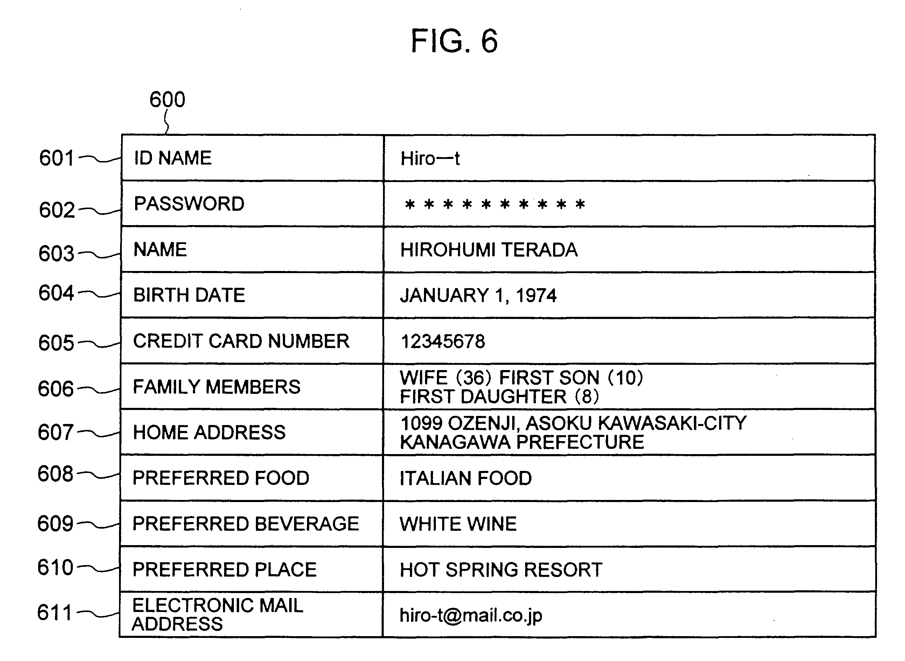

Fig. 6 shows the data structure for the personal information registered in the personal information database. A personal information data table 600 is comprised of ID name 601, password 602, name 603, birth date 604, credit card number 605, family members 606, home address 607, preferred food 608, preferred beverage 609, preferred place 610, and electronic mail address 611. ID name 601 and password 602 are used to identify an individual. Name 603, birth date 604 and credit card number 605 are information required to conduct a settlement. Family members 606 are information required to make a variety of reservations when a family trip is organized. Home address 607, preferred food 608, preferred beverage 609, and preferred place 610 are information required to create a travel plan. Electronic mail address 611 is information required to let the user know that a variety of reservations, orders and settlements have been completed for a travel plan.

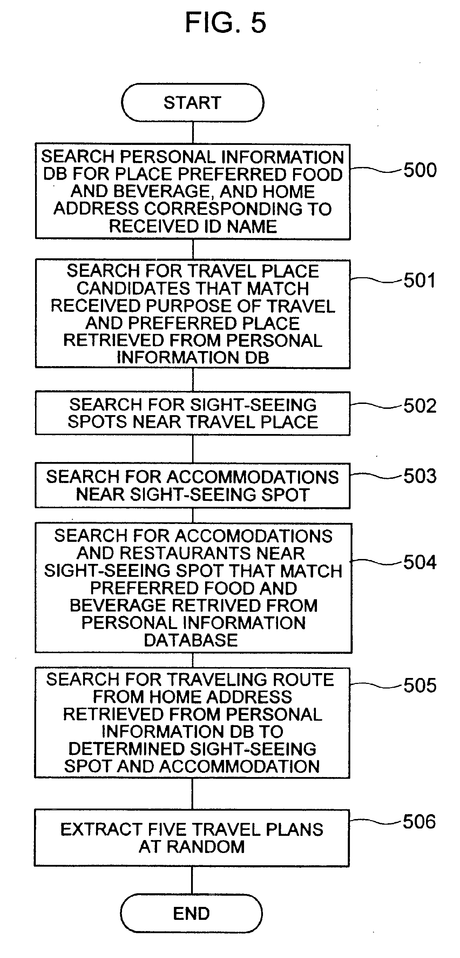

Fig. 5 illustrates a flow chart for processing involved in matching travel information with personal information, as previously shown in Fig. 2. First, the server searches the personal information database for ID name 401 included in travel planning request transmission information 400, in Fig. 4, received by the server, and fetches from a data table 600 preferred place 610, preferred food 608, preferred beverage 609, and home address 607 having the same ID name 601 retrieved from the personal information database (step 500). Next, the received purpose of travel 402 and the previously fetched preferred place 610 are compared with information on the purpose of visit and place for each of travel spots stored in the sight-seeing information database 131 in the travel contents company service system 130 in Fig. 1 to search for travel place candidates (step 501). In this way, a travel place can be determined. Next, the sight-seeing information database 131 is searched for particular sight-seeing spots around the travel place (step 502). Sight-seeing spots stored in the sight-seeing information database 131 of the travel contents company service system 130 in Fig. 1 include information on travel places, so that this information is compared with the determined travel place to search for sight-seeing spots. Further, sight-seeing spots and sight-seeing information associated therewith are retrieved from the database, and added to the possible travel plans. Next, the server searches the sight-seeing information database 131 and so on for accommodations near the determined sight-seeing spot (step 503). The travel contents stored in the sight-seeing information database 131 of the travel contents company service system 130 in Fig. 1, each hotel company service system, and so on have location information on each hotel, and a reservation state in each hotel, so that the server searches for hotels from the one located nearest from the sight-seeing spot, and determines the nearest possible hotel as accommodation, if it still has vacant rooms. In this way, the accommodation can also be determined. Thus, the accommodation and accommodation information associated therewith are added to the possible travel plans. Next, the server searches the sight-seeing information database 131 and so on for restaurants that match preferred food 608 and preferred beverage 609 of the personal information (step 504). The travel contents stored in the sight-seeing information database 131 of the travel contents company service system 130 in Fig. 1, each restaurant company service system, and so on have information on the type of meals and the type of beverages, and location information for each restaurant, so that the server searches for restaurants from the one located nearest from the accommodation and/or the sight-seeing spot. In this way, preferred restaurants can also be determined. Then, the restaurants and information on meals associated therewith are added to the possible travel plans. Next, the server uses home address 607 in the personal information to search for a traveling route from the home to the sight-seeing spot, and to the accommodation (step 505). This travelling route is searched from a route search service system or the like. Then, the result of the search for the traveling route and information associated therewith are added to the possible travel plans. With the foregoing procedure, possible travel plans using the personal information can be automatically created. Before transmitting the created travel plans to the client terminal, the server randomly extracts five travel plans and transmits only these five travel plans to the client terminal (step 506). It should be noted that for creating travel plans, the server may previously link to personal information on a fellow traveler (travelers), such that travel planning may be made in account of it.

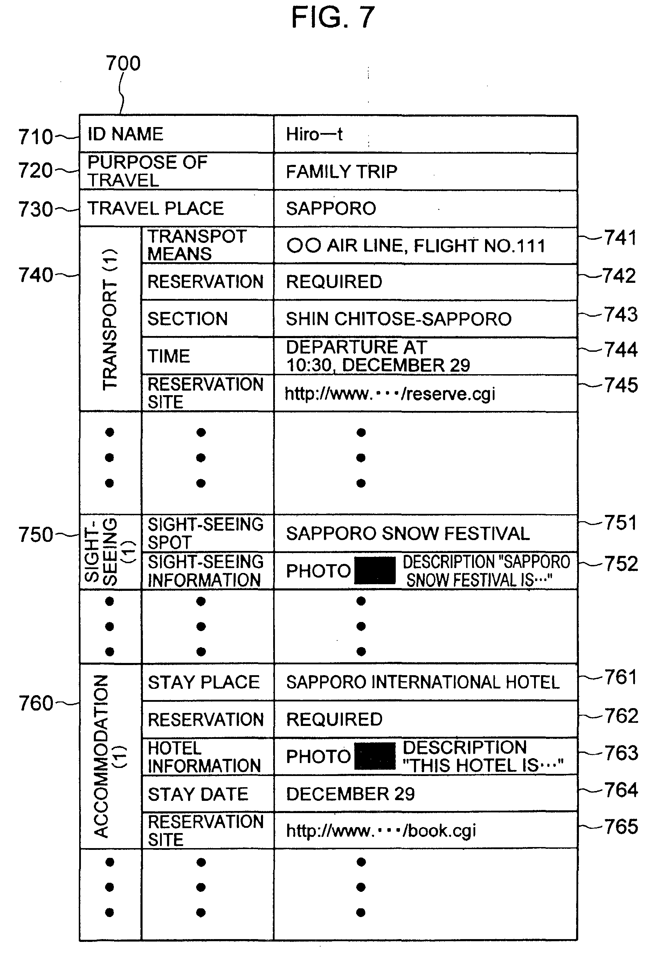

Fig. 7 shows a travel plan which has been automatically created in the manner described above. The travel plan is registered in the travel plan database when the travel planning requester actually order the travel. A data structure 700 for the travel plan is comprised of ID name 710, purpose of travel 720, travel place 730, data on transport 740, data on sight-seeing 750, data on accommodation 760, and so on. ID name 710 is an identifier for representing a person for whom the travel plan was made. Purpose of travel 720 is utilized when the number of persons is determined for a variety of reservations such as accommodations. In this example, the travel plan is made for family trip, so that the number of persons can be fetched from the personal information without entering the number of persons, since the family members have been previously registered in the personal information. The data on transport 740 consists of transport means 741, reservation 742, section 743, time 744, and reservation site 745. The data on transport 740 is created for each transport. Transport means 741 represents a specific means for transport, and specifically stores a flight name and an air line company name, and a train number, a train name, and a railway company name. Reservation 742 stores information indicative of whether reservation is required. Section 743 stores a section of transportation. Time 744 stores a departure time together with a date. Reservation site 745 stores information indicating where to access to make a reservation, when a reservation is required. This information is utilized by the server. The data on sight-seeing 750 consists of sight-seeing spot 751 and sight seeing information 752. This data on sight-seeing 750 is also created for each sight-seeing spot. Sight-seeing spot 751 stores the name of the sight-seeing spot, while sight-seeing information 752 stores a still image or a moving image representative of the sight-seeing spot, audio and/or textual description, and so on. The data on accommodation 760 consists of stay place 761, reservation 762, hotel information 763, stay date 764, and reservation site 765. This data on accommodation 760 is also created for each accommodation. Stay place 761 stores the name of the place for stay; reservation 762 stores information indicative of whether a reservation is required; hotel information 763 stores a still image or a moving image representative of the accommodation (hotel), audio and/or textual description, and so on. Stay date 764 stores a date for stay. Reservation site 765 stores information indicating where to access to make a reservation when a reservation is required. This information is utilized by the server.

Reference is next made to a procedure for determining access sites for a variety of the processing in Fig. 2. Fig. 8 illustrates a flow chart of the procedure. First, upon receipt of a travel order request, the server searches a travel plan database (DB) for a travel plan corresponding to the travel order request based on the ID name in the received travel order request, and retrieves the travel plan (step 801). Then, the server examines whether a corresponding travel plan is stored in the travel plan DB (step 802), and terminates the procedure if no such travel plan is found, and sets the value of "1" to a variable i when the travel plan is found (step 803). Since each travel plan stored in the travel plan DB may include a plurality of data on transport, sight-seeing and accommodations, these data are stored in the form of array. For example, in Fig. 7, the data on transport is stored in an array Idou, wherein transport(1) 740 corresponds to Idou(1). The data on transport is comprised of a plurality of values in combination for each transport. For example, the value for Idou(1)_transport means is " ○○ Air Line, Flight No. 111". Next, the server examines whether the value of Idou(i) is NULL (step 804), and terminates the procedure if NULL is found. Otherwise, the server repeats the following steps. Specifically, the server examines whether Idou(i)_reservation is "required" (step 805). When Idou(i)_reservation is "required," this means that a reservation is required, so that the server retrieves information on reservation from Idou(i) (step 806). The information on reservation includes a transport means, section and time for the data on transport. Then, the server retrieves a place to which the server should access from Idou(i)_reservation site (step 807). The information thus retrieved is utilized by the server when a reservation is made. Then, the value of the variable i is incremented by one, followed by the procedure returning to step 804. For the accommodation, a similar procedure is executed. In the foregoing manner, the server can retrieve from data on the travel plan, all access sites to which the server accesses when a reservation is required.

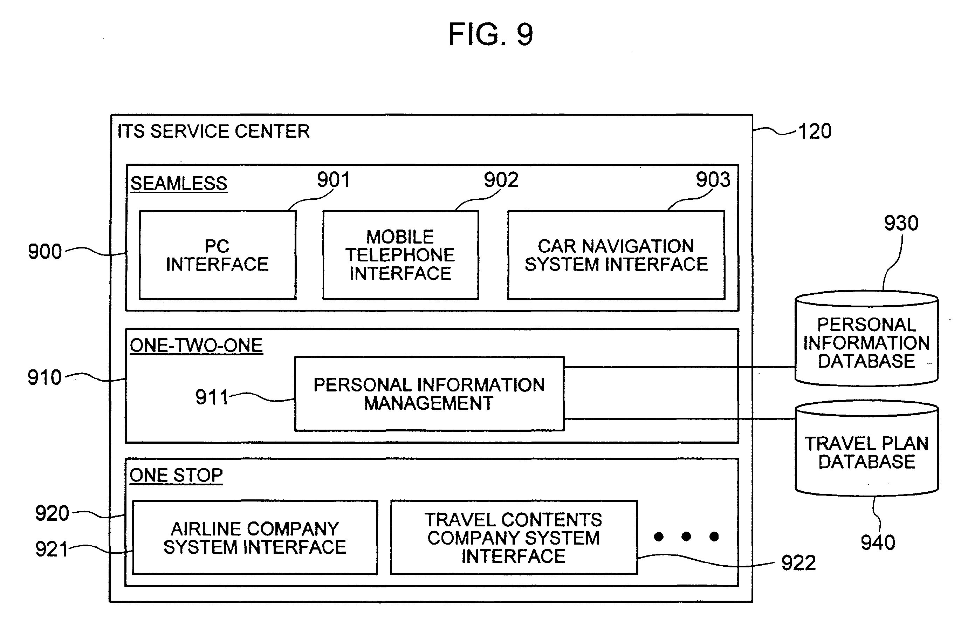

Next, Fig. 9 illustrates the system architecture of the server in the ITS service center 120. The ITS service center 120 implements a seamless function 900, a one-to-one function 910, and a one-stop function 920. The seamless function 900 is comprised of a PC interface 901, a mobile telephone interface 902, and a car navigation system interface 903. Each of these components has an interface for communicating with the PC 101, the Internet supporting mobile telephone 102, and the car navigation system 103, respectively, in Fig. 1. The one-to-one function 910 has a personal information management function 911. The personal information management function 911 manages a personal information database 930 and a travel plan database 940, such that personal information and travel plans can be accessed from any client terminal. The one-stop function 920 is comprised of an air line company system interface, a travel contents company system interface, and so on. Each of these components has an interface for communicating with the sight-seeing information database 131 of the travel contents company service system 130 and the flight information database 141 of the air line company service system 140, respectively, in Fig. 1.

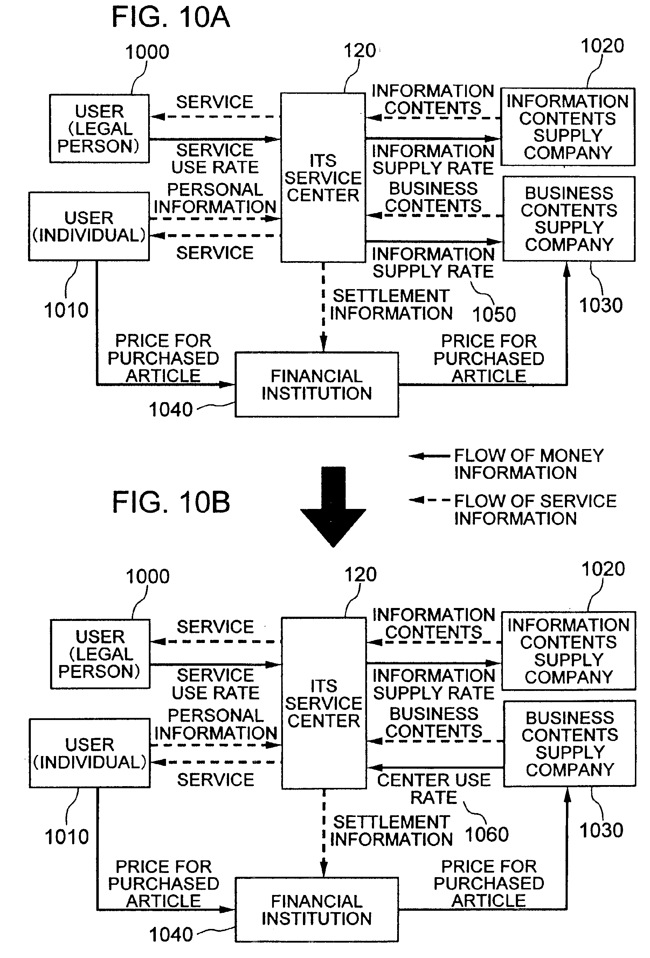

Next, Figs. 10A and 10B illustrate business model diagrams in an embodiment of the present invention. In the business model according to this embodiment of the present invention, a money flow varies in a business inauguration period and in a business stable period. Fig. 10A illustrates a business model diagram in the business inauguration period, and Fig. 10B illustrates a business model diagram in a business stable period. In these figures, solid lines represent flows of money information, and broken lines represent flows of service information. The business model diagram includes the ITS service center 120, a user (legal person) 1000, a user (individual) 1010, an information contents supply company 1020, a business contents supply company 1030, and a financial institution 1040. The information contents supply company 1020 may be a company which supplies contents such as sight-seeing information. The business contents supply company 1030 may be a hotel or the like. The ITS service center 120 utilizes information contents supplied by the information contents supply company 1020, and pays a rate for the information supplied thereto. Also, the ITS service center 120 utilizes business contents from the business contents supply company 1020 in the business inauguration period, and pays a rate for the information supplied thereto (arrow 1050), but charges a center use rate from the business contents supply company 1030 in the business stable period (arrow 1060). While the ITS service center 120 pays an information supply rate for utilization of the business contents during the business inauguration period (arrow 1050), the business contents may be utilized free of charge. Then, the ITS service center 120 supplies services to the user (legal person) 1000 and the user (individual) 1010. While the ITS service center 120 charges a service use rate from the user (legal person) 1000, the ITS service center 120 is provided with personal information from the user (individual) 1010 by registering the personal information. As the user (individual) 1010 purchases an article on the ITS service center 120, the ITS service center 120 provides the financial institution 1040 with settlement information to debit the price for the purchased article from the user (individual) 1010 and to transfer to the business contents supply company 1030.

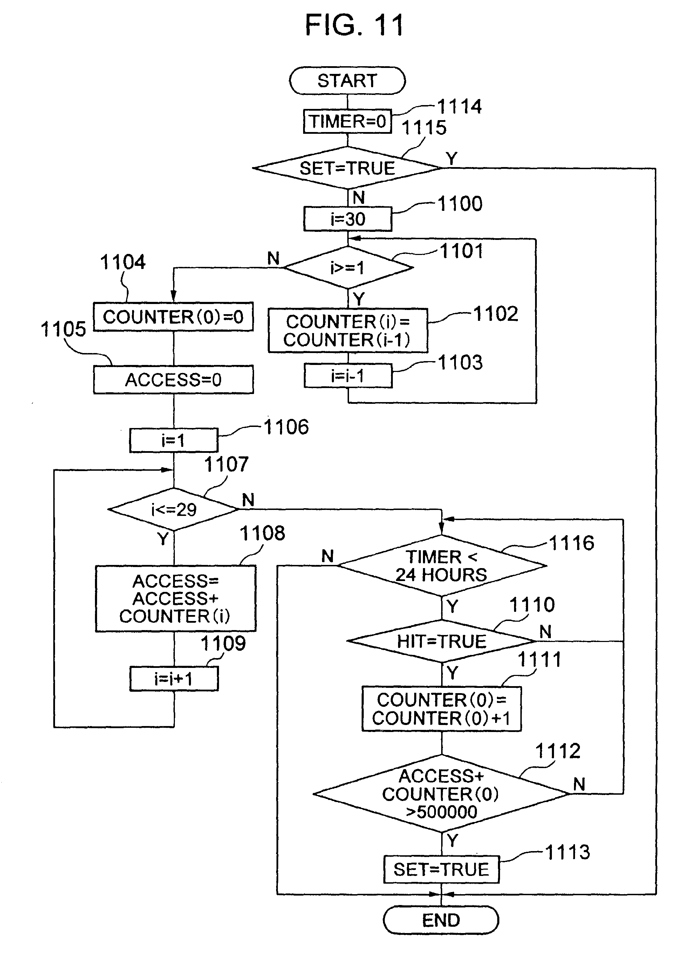

Fig. 11 illustrates a processing procedure for determining whether a business is in an inauguration period and in a stable period. In the flow chart of Fig. 11, the stable period is determined when the value of a variable Set is true. The processing from START to END is repeated every day. A variable Timer stores a period of time from the processing is started. An initial value for the variable Set is false. There is an array Counter comprised of 30 elements for holding the number of accesses per day to a home page of the ITS service center 120 for the latest one month. For example, Counter(0) indicates the number of accesses to the home page today; Counter(1) indicates the number of accesses to the home page one day before; and Counter(2) indicates the number of accesses to the home page two days before. Assume that the number of accesses on the counter is incremented by one when any of home pages within the ITS service center 120 is accessed. First, the value of the variable Timer, serving as a timer, is initialized (step 1114). Then, it is examined whether or not the value of the variable Set is true (step 1115). When true, this means the business stable period, so that the processing is terminated. Conversely, when false, i.e., when the business is not yet in the stable period, the numbers of accesses from one day before to 29 days before are updated. The value of the variable i is set to 30 (step 1100). As long as the value of the variable i is one or more, subsequent steps 1102, 1103 are repeated (step 1101). The value of Counter (i-1) is substituted into Counter (i) (step 1102), and the value of the variable i is decremented by one (step 1103). When the numbers of accesses have been updated for a period from one day before to 29 days before, the value of Counter(0) is initialized (step 1104). The value of Counter(0) indicates the number of accesses today. Next, the value of a variable Access is initialized (step 1105). The variable Access stores the total number of accesses for the period from one day before to 29 days before. Then, the total number of accesses for the period from one day before to 29 days before is calculated and stored in the variable Access. First, the value of the variable i is set to "1" (step 1106). As long as the value of variable i is 29 or less, subsequent steps 1108, 1109 are repeated (step 1107). The value of Access+Counter(i) is substituted into Access (step 1108), and the value of the variable i is incremented by one (step 1109). After calculating the total number of accesses from the period from one day before to 29 days before, the flow proceeds to the next processing. Until the value of the variable Timer reaches 24 hours, the following steps are executed (step 1116). The flow waits for an access to a home page in the ITS service center 120 (step 1110). The value of a variable hit becomes true when any of the home pages in the ITS service center 120 is accessed to start a display program. When any of the home pages of the ITS service center 120 is accessed, the value of Counter(0), indicative of the total number of accesses today, is incremented by one (step 1111). Then, the sum of the value of Access indicative of the total number of accesses for the period from one day before and to 29 days before and Counter(0) indicative of the number of accesses for today is calculated (step 1112), and the stable period is determined if the value exceeds 500,000 (step 1113). Otherwise, the flow again waits a next access to a home page. The determination as to the business is in the inauguration period or the stable period is determined in the procedure described above. While in this embodiment of the present invention, the money flow is switched only between the business inauguration period and the business stable period, the center use rate may be gradually changed.

As described above, according to the first embodiment, a travel plan in favor of an individual's preference can be created taking advantages of personal information such as the individual's preference and idea, family members and so on, location, and time.

In addition, a variety of reservations and settlements involved in a travel can be processed using information on a travel plan registered in the travel plan database without requiring the user to link and navigate among a variety of reservation home pages and settlement sites.

Further, information can be delivered in accordance with particular conditions on movement (including an originating place, destination, purpose, means, and current location), which relates to the user's situation, and a used terminal.

As described above, the installation of the ITS service station enables composite services to be supplied in accordance with an individual's preference even if the user is in any situation.

According to the foregoing embodiment of the present invention, it is possible to supply a one-stop service in accordance with the user's preference, family members, and a used terminal as well as to simply supply a service along entries of the user.

Further, any service can be supplied in consideration of a movement of the user in a flexible form pursuant to any situation of movement.

## Claims

1. A service processing apparatus (120) connected to a service requesting apparatus (101, 102, 103) for requesting a service through a network (150, 160, 170) for executing information processing for supplying a service to a user (100) who uses said service requesting apparatus, said service processing apparatus comprising:
means for receiving situation information (600) indicative of a particular situation of said user, said information transmitted from said service requesting apparatus;
means for receiving information related to said service, said information transmitted from said service requesting apparatus;
means for executing information processing (201-203, 206-211, 301-305) for supplying said service based on said received information; and
means for transmitting information on said information processing in a form corresponding to said situation information through said network.

2. A service processing apparatus according to claim 1, wherein:
said situation information includes identification information for identifying said service requesting apparatus; and
said means for transmitting transmits the information related to said information processing in a form in accordance with a display capability of said service requesting apparatus identified by said identification information.

3. A service processing apparatus according to claim 1, wherein:
said situation information includes moving situation information indicative of a moving situation of said user; and
said means for transmitting transmits the information related to said information processing in a form in accordance with said moving situation.

4. A service processing apparatus according to claim 3, wherein:
said moving situation information includes information for identifying transport means used by said user; and
said means for transmitting transmits the information related to said information processing to an information processing unit possessed by said transport means in a form corresponding said information processing unit.

5. A service processing apparatus according to claim 1, wherein:
said means for transmitting transmits the information related to said information processing to said service requesting apparatus through said network.

6. A service processing apparatus (120) connected through a network (150, 160, 170) to a service requesting apparatus (101, 102, 103) for requesting a service and to a plurality of service element processing apparatus (900, 910, 920) for executing information processing for each of elements constituting a service, said service processing apparatus executing information processing for supplying a service to a user (100) utilizing said service requesting apparatus during movement, comprising:
means for receiving situation information (600) indicative of a particular situation of said user, said information transmitted from said service requesting apparatus;
means for receiving service requesting information for requesting supply of said service, said service requesting information transmitted from said service requesting apparatus;
means for forcing a service element processing apparatus (900, 910, 920) corresponding to said service request information to execute information processing related to said element to execute information processing for supplying a service in accordance with characteristics of said user based on said executed information processing related to said element; and
means for transmitting the result of said executed information processing through said network in a form corresponding to said situation information.

7. A service processing apparatus according to claim 6, wherein:
said means for executing information processing forces a service element processing apparatus having element information which includes characteristics that match characteristics included in personal information of said user, within element information possessed by said service element processing apparatus, to execute information processing related to said element.

8. A service processing apparatus according to claim 6, wherein:
said service comprises a service related to a travel, and said element information includes information (760) related to accommodation during a travel and information (740) related to transport means; and
said means for executing executes reservation processing for at least one of said accommodation and said transport means for said service element processing apparatus.

9. A service processing apparatus according to claim 8, wherein:
said means for transmitting transmits the result of said executed information processing to said service requesting apparatus.

10. An information processing method in a service supply system comprised of a plurality of client terminals (101, 102, 103) for requesting supply of a service, a server apparatus (120) for processing information for supplying said service in response to a request from said client terminal, and a plurality of system server apparatus (130, 140) for processing information for executing each of elements constituting said service, said client terminals, said server apparatus, and said system server apparatus being interconnected through a network (150, 160, 170), said method comprising the steps of:
measuring an amount of use by said client terminal for said server apparatus;
comparing said measured amount of use for a predetermined period of time with a previously stored amount of use; and
changing a use rate of said server paid and received between a manager of said server apparatus and a manager of said system server apparatus in accordance with the result of the comparison at said step of comparing.

11. An information processing method according to claim 10, wherein said step of changing further comprises:
when said measured amount of use is large, said server apparatus executing information processing for claiming a use rate for said server apparatus to the manager of said system server apparatus; and
when the result of said comparison at the step of comparing indicates that said measured use frequency is low, said server executing information processing for paying a use rate for said system server apparatus to the manager of said system server apparatus.

12. An information processing method according to claim 10, wherein:
said use rate includes a free-of-charge zone.

13. An information processing method according to claim 10, wherein:
said use rate is changed at multiple levels in accordance with the amount of use.

14. An information processing method according to claim 10, wherein:
said amount of use includes at least one of the number of times of accesses from said client terminal to said server apparatus, the number of times of information processing for supplying a service of said server apparatus, a time from said server apparatus has been established, and a use time by said client terminal of said server apparatus.
